# EUROPEAN PATENT SPECIFICATION

(11) **EP 2 699 613 B1**
(45) Date of publication and mention of the grant of the patent: **08.06.2016**
(21) Application number: 12713764.4
(22) Date of filing: 16.04.2012
(51) Int. Cl.: C08G 18/08, C08G 18/42, C08G 18/66, C08L 75/04, C08L 75/06, C08G 83/00

(54) **AQUEOUS RESIN COMPOSITION COMPRISING A POLYESTER-POLYURETHANE RESIN AND A DENDRITIC POLYOL**
WÄSSRIGE HARZZUSAMMENSETZUNG MIT EINEM POLYESTER-POLYURETHANHARZ UND EINEM DENDRITISCHEN POLYOL
COMPOSITION DE RÉSINE AQUEUSE COMPRENANT UNE RÉSINE POLYESTER-POLYURÉTHANE ET UN POLYOL DENDRITIQUE

(30) Priority: 19.04.2011 EP 11163051
(43) Date of publication of application: 26.02.2014
(73) Proprietor: Covestro Deutschland AG, 51373 Leverkusen (DE)
(72) Inventor: SCHRINNER, Marc, Claudius, D-90409 Nürnberg (DE); GEWIß, Heinz-Dietmar, 40668 Meerbusch (DE); REYER, Robert, 40764 Langenfeld (DE); YUVA, Nusret, 51399 Burscheid (DE); MELCHIORS, Martin, 42799 Leichlingen (DE)
(74) Representative: Levpat
(86) International application number: PCT/EP2012/056911
(87) International publication number: WO 2012/143328

(56) References cited:
- EP-A1- 0 648 485
- US-A- 5 418 301
- US-A1- 2004 204 559
- US-B1- 6 284 233

## Description

The present invention relates to an aqueous resin composition comprising a polyester-polyurethane resin and a dendritic polyol. The invention further relates to a process for preparing the aqueous resin composition according to the invention, an aqueous coating system comprising the aqueous resin composition according to the invention and the use of the aqueous coating system according to the invention for coating, varnishing and/or sealing a substrate subjected to a marine environment.

Aqueous binders based on polyurethane dispersions are well-known and are described for example in Houben-Weyl, Methoden der organischen Chemie, 4. ed. volume E 20, p. 1659 (1987), J. W. Rosthauser, K. Nachtkamp in "Advances in Urethane Science and Technology", K. C. Frisch and D. Klempner, Editors, Vol. 10, pp. 121-162 (1987) or D. Dietrich, K. Uhlig in Ullmann's Encyclopedia of Industrial Chemistry, Vol. A 21, p. 677 (1992).

When used as coatings such binders may be used to enhance the outer appearance of the substrate or to protect the underlying substrate from adverse environmental conditions. Examples of prior publications include:
EP 0 669 352 A1 which describes special aqueous polyester-polyurethane dispersions which, in combination with cross-linker resins and, where appropriate, with linear, hydroxyl-free polyurethane dispersions, can be cured to give coatings having a good soft-feel effect, good mechanical properties, and a generally satisfactory solvent resistance. For certain applications, however, the resistance, particularly the resistance to suntan lotion, are still in need of improvement.
EP 0 926 172 A2 describes aqueous two-component (2K) polyurethane coating materials in which the resistance to suntan lotion (which penetrates the film, causing delamination and/or other damage) can be improved by using special ester-modified polyisocyanates. The binders used in that case are mixtures of carboxylate- and/or sulfonate-hydrophilicized polyester polyol dispersions with physically drying, carboxylate- and/or sulfonate-hydrophilicized polyurethane dispersions.
EP 0 578 940 A1 describes water dispersible polyurethane polyols on the basis of polyester and polycarbonate polyols or segmented polyestercarbonate polyols containing 25 to 100% of acid groups neutralized with bases, corresponding to an acid number of 6 to 45 mg KOH/g, with a hydroxyl number of 20 to 250 mg KOH/g, a molecular weight M_{w} of 2000 to 150000, a urethane group content of 2 to 16 weight-% and a carbonate group content of 1 to 25 weight-%. Also described are a method for the production of water-dilutable binder combinations from 30 to 90 weight-% of such polyols and 2 to 70 weight-% of a cross-linker resin and the use of such polyols as binder component in coatings or sealing materials.
EP 1 418 192 A1 is concerned with water-dilutable polyurethane resins with a carbonate group content of 5,8 to 20,0 weight-% and which is present in a solvent, the solvent being inert towards isocyanate groups.

With respect to coatings having good weather stability US 2010/0222448 A1 discloses an aqueous polyurethane dispersion obtained by dispersing in water a reaction product obtained by reacting a reaction mixture comprising at least one organic, aliphatic, cycloaliphatic or aromatic di-, tri- or polyisocyanate, at least one isocyanate reactive polycarbonate diol, triol or polyol, at least one compound comprising at least one isocyanate reactive group and at least one free radically polymerizable unsaturated group, and at least one compound comprising at least one isocyanate reactive group and at least one at least dispersing active group, and optionally at least one compound com-prising at least two isocyanate reactive groups and having a molecular weight of less than 1000 g/mole. While not elucidated by experiments, the general possibility that dendritic polyester and/or polyether polyols may be used for the production of the polycarbonate diols, triols and polyols is mentioned in this patent application.

An example for a film-forming polymer dispersion comprising a dendritic polymer is given in US 6,284,233 which relates to an antiwrinkle composition that includes, in a physiologically acceptable medium: a dispersion of a film-forming polymeric system containing at least one polymer capable of forming a film permeable to water vapor, having a Young's modulus ranging from 10⁸ to 10¹⁰ N/m² and producing, after application at a concentration of 7% in water and then drying, a retraction of the isolated stratum corneum greater than 1% at a temperature of 30 °C and a relative humidity of 40%, and a dendritic polyester polymer having terminal hydroxyl functional groups.

There is a constant need in the art for improved coatings which are not degraded by exterior conditions. This is especially the case in coatings for objects in marine environments that are constantly exposed to moisture, direct and reflected sunlight and salt. Such objects might be wind energy systems in off-shore wind energy facilities.

The present invention therefore has the object of providing compositions for coatings which protect objects in the above-mentioned environment over a longer period of time.

According to the invention this object is achieved by an aqueous resin composition comprising a polyester-polyurethane resin obtained by reacting, in a one-stage process or multi-stage process, a reaction mixture comprising
(A1) a polyester polyol with a number-average molecular weight Mₙ of ≥ 400 g/mole to ≤ 20000 g/mole determined according to DIN 55672/1,
(A2) at least one compound containing at least two isocyanate-reactive groups and at least one group capable of forming anions, and
(A3) a polyisocyanate,
the aqueous resin composition further comprising a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X).

In combination with a binder the aqueous resin compositions according to the invention result in 1K or 2K coatings which display an excellent resistance to environmental conditions that are encountered in marine environments.

Polyester polyols which can be used as component A1) have a molecular weight Mₙ determined according to DIN 55672/1 of ≥ 400 g/mole to ≤ 20000 g/mole, preferably ≥ 600 g/mole to ≤ 10 000 g/mole, more preferably ≥ 600 g/mole to ≤ 6 000 g/mole. Their hydroxyl number (DIN 53240 part 2) may generally be from 22 to 400, preferably from 50 to 200 mg KOH/g. The OH functionality may be in the range from 1.5 to 6, preferably 1.8 to 3, and more preferred from 1.9 to 2.5.

Highly suitable compounds are the conventional polycondensates of diols and also, where appropriate, polyols (triols, tetraols) and dicarboxylic and also, where appropriate, polycarboxylic (tricarboxylic, tetracarboxylic) acids or hydroxycarboxylic acids or lactones. Instead of the free polycarboxylic acids it is also possible to use the corresponding polycarboxylic anhydrides or corresponding polycarboxylic esters of lower alcohols to prepare the polyesters. Examples of suitable diols are ethylene glycol, butylene glycol, diethylene glycol, triethylene glycol, polyalkylene glycols such as polyethylene glycol, and also propanediol or butane-1,4-diol, preference being given to hexane-1,6-diol, neopentylglycol or neopentylglycol hydroxypivalate. If desired it is also possible to use polyols such as trimethylolpropane, glycerol, erythritol, pentaerythritol, trimethylolbenzene or trishydroxyethyl isocyanurate, for example, as well. Examples of suitable dicarboxylic acids are phthalic acid, isophthalic acid, terephthalic acid, tetrahydrophthalic acid, hexahydrophthalic acid, cyclohexane dicarboxylic acid, adipic acid, azeleic acid, sebacic acid, glutaric acid, tetrachlorophthalic acid, maleic acid, fumaric acid, itaconic acid, malonic acid, suberic acid, 2-methyl succinic acid, 3,3-diethylglutaric acid, 2,2-dimethyl succinic acid. The possible anhydrides of these acids are likewise suitable. In the content of the present invention the anhydrides are always embraced by "acid".

It is also possible to use monocarboxylic acids, such as benzoic acid and hexanecarboxylic acid, provided that the average functionality of the polyol is greater than 2. Saturated aliphatic or aromatic acids are preferred, such as adipic acid or isophthalic acid. If desired it is also possible to use relatively small amounts of polycarboxylic acid as well, such as trimellitic acid.

Hydroxycarboxylic acids which can be used as reaction participants in the preparation of a polyester polyol having terminal hydroxyl groups are for example hydroxycaproic acid, hydroxybutyric acid, hydroxydecanoic acid, hydroxystearic acid and the like. Suitable lactones are, for example, caprolactone or butyrolactone.

Compounds of component A1) may also include, at least proportionally, primary or secondary amino groups as isocyanate-reactive groups.

Ionic or potentially ionic compounds suitable as component A2) include for example mono- and dihydroxycarboxylic acids, mono- and diaminocarboxylic acids, mono- and dihydroxysulfonic acids, mono- and diaminosulfonic acids and salts thereof such as dihydroxycarboxylic acids, hydroxypivalic acid, N-(2-aminoethyl)-β-alanine, 2-(2-aminoethylamino)ethanesulfonic acid, ethylene-diamine-propyl- or butylsulfonic acid, 1,2- or 1,3-propylenediamine-β-ethylsulfonic acid, lysine, 3,5-diaminobenzoic acid, the hydrophilicizing agent according to Example 1 from EP 0 916 647 A2 and its alkali metal salts and/or ammonium salts; the adduct of sodium bisulfite with but-2-ene-1,4-diol polyethersulfonate or the propoxylated adduct of 2-butenediol and NaHSO₃ (e.g. in DE 2 446 440 A1, page 5-9, formula I-III). Preferred ionic or potential ionic compounds A2) are those which possess carboxyl and/or carboxylate groups. Particularly preferred ionic compounds A2) are dihydroxycarboxylic acids, especially α,α-dimethylolalkanoic acids, such as 2,2-dimethylolacetic acid, 2,2-dimethylolpropionic acid, 2,2-dimethylolbutyric acid, 2,2-dimethylolpentanoic acid or dihydroxysuccinic acid.

It is preferred that the amount of the component A2) is rather high, for example in the range of ≥ 5 weight-% to ≤ 10 weight-%, based on the total weight of components A1), A2) and A3). Particularly preferred is an amount of ≥ 6 weight-% to ≤ 7 weight-%. For example, 2,2-dimethylolpropionic acid as sole component A2) may be present in ≥ 5 weight-% to ≤ 10 weight-%, based on the total weight of components A1), A2) and A3), Particularly preferred in amount of ≥ 6 weight-% to ≤ 7 weight-%.

The acid groups incorporated in the resin by component A2) can at least proportionally be neutralized. An example of such is dimethylethanolamine, which serves preferably as the neutralizing agent.

In the context of the present invention, dendritic polymers in general are a class of polymers in the form of highly branched globular macromolecules. Dendritic polymers have traditionally been classified into 2 categories: dendrimers and hyperbranched polymers. A dendrimer is characterised by a perfect symmetrical globular shape which results from a step-wise controlled process giving a monodisperse molecular weight distribution. The second category, the hyperbranched polymer is attractive because they resemble dendrimers (their difference lies in their polydispersity and the less perfect globular shape) but they can be produced more easily on a larger scale.

Suitable dendritic polyols are described in US 5,418,301.

Polyisocyanates A3) that may be used include aromatic and aliphatic polyisocyanates, the aliphatic polyisocyanates being preferred.

By way of example, the polyester-polyurethane resin may be obtained by reacting, in a one-stage process or multi-stage process, a reaction mixture comprising:
≥ 60 weight-% to ≤ 80 weight-% of A1),
≥ 5 weight-% to ≤ 10 weight-% of A2) and
≥ 15 weight-% to ≤ 25 weight-% A3), the total weight percentages of A1), A2) and A3) adding up to ≤ 100 weight-%.

By way of another example, the aqueous resin composition according to the invention may comprise:
≥ 50 weight-% to ≤ 70 weight-% (based on solids content) of the polyester-polyurethane resin and
≥ 30 weight-% to ≤ 50 weight-% (based on solids content) of the dendritic polyol, the total weight percentages of the polyester-polyurethane resin and the dendritic polyol adding up to ≤ 100 weight-%.

Preferred embodiments and other aspects of the present invention are described below. They may be combined freely unless the context clearly indicates otherwise.

In one embodiment of the aqueous resin composition according to the invention, in the dendritic polyol the tree structure is extended and further branched from the initiator molecule or initiator polymer through an addition of further molecules of a monomeric chain extender by means of bonding with the reactive groups (X) and (Y) thereof and/or is further extended through reaction with a chain stopper.

In another embodiment of the aqueous resin composition according to the invention, in the dendritic polyol the central initiator molecule or initiator polymer is selected from the group consisting of an aliphatic diol, a cycloaliphatic diol, an aromatic diol, a triol, a tetrol, a sugar alcohol, anhydroennea-heptitol, dipentaerythritol, an alpha-alkylglucoside, a monofunctional alcohol, and an alkoxylate polymer having a molecular weight of at most 8000 g/mol and being produced by reaction between an alkylene oxide and one or more hydroxyl groups originating from one of the aforementioned compounds.

Preferably, in the dendritic polyol the central initiator molecule is selected from the group consisting of ditrimethylolpropane, ditrimethylolethane, dipentaerythritol, pentaerythritol, alkoxylated pentaerythritol, trimethylolethane, trimethylolpropane, alkoxylated trimethylolpropane, glycerol, neopentyl glycol, dimethylolpropane, 1,3-dioxane-5,5-dimethanol, sorbitol, mannitol and alpha-methylglucoside.

In another embodiment of the aqueous resin composition according to the invention, in the dendritic polyol the chain extender is selected from the group consisting of a monofunctional carboxylic acid having at least two hydroxyl groups and a monofunctional carboxylic acid having at least two hydroxyl groups wherein one or more of the hydroxyl groups are hydroxyalkyl substituted.

Preferably, in the dendritic polyol the chain extender is selected from the group consisting of dimethylolpropionic acid, alpha, alpha-bis (hydroxymethyl)butyric acid, alpha, alpha, alpha-tris(hydroxymethyl)-acetic acid, alpha, alpha-bis-(hydroxymethyl)valeric acid, alpha, alpha-bis(hydroxy)propionic acid and 3,5-dihydroxybenzoic acid.

A particularly preferred combination is a dendritic polyol as outlined above where the central initiator molecule is trimethylolpropane and the chain extender is dimethylolpropionic acid.

In another embodiment of the aqueous resin composition according to the invention the reaction mixture for obtaining the polyester-polyurethane further comprises
A4) a polycarbonate polyol which is different from polyester polyol A1) with a number
average molecular weight of ≥ 400 g/mole to ≤ 6000 g/mole determined according to DIN 55672/1.

Component A4) suitably comprises hydroxyl-containing polycarbonates whose molecular weight Mₙ is ≥ 400 g/mole to ≤ 6000 g/mole (determined according to DIN 55672/1), preferably ≥ 600 g/mole to ≤ 3000 g/mole, and which are obtainable, for example, by reacting carbonic acid derivatives, e.g. diphenyl carbonate, dimethyl carbonate or phosgene, with polyols, and in some cases diols. Examples of suitable such diols include ethylene glycol, 1,2- and 1,3-propanediol, 1,3- and 1,4-butanediol, 1,6-hexanediol, 1,8-octanediol, neopentylglycol, 1,4-bishydroxymethyl-cyclohexane, 2-methyl-1,3-propanediol, 2,2,4-trimethylpentane-1,3-diol, dipropylene glycol, polypropylene glycols, dibutylene glycol, polybutylene glycols, bisphenol A, tetrabromobisphenol A, and also lactone-modified diols. The diol component contains preferably from 40 to 100% by weight of hexanediol, preferably 1,6-hexanediol and/or hexanediol derivatives, preferably those which in addition to terminal OH groups contain ether groups or ester groups, examples being products obtained by reacting 1 mol of hexanediol with at least 1 mol, in some cases 1 to 2 mol, of caprolactone or by etherifying hexanediol with itself to give dihexylene or trihexylene glycol. Additionally the polyether-polycarbonate diols described in DE 37 17 060 A1 can be employed.

The hydroxyl polycarbonates A4) are preferably linear. They may, however, be slightly branched where appropriate through the incorporation of polyfunctional components, especially low molecular weight polyols. Compounds suitable for this purpose include for example glycerol, trimethylolpropane, hexane-1,2,6-triol, butane-1,2,4-triol, trimethylolethane, pentaerythritol, quinitol, mannitol, and sorbitol, methylglycoside or 1,3,4,6-dianhydrohexitols.

In another embodiment of the aqueous resin composition according to the invention the reaction mixture for obtaining the polyester-polyurethane further comprises
A5) a low molecular weight compound containing two or more hydroxy and/or amino groups having a molecular weight of from ≥ 60 g/mole to ≤ 400 g/mole.

The low molecular weight polyols A5) are used in general for the purpose of stiffening and/or branching the polymer chain. The molecular weight is in the range of ≥ 60 g/mole to ≤ 400 g/mole, preferably from ≥ 62 g/mole to ≤ 200 g/mole. They can contain aliphatic, cycloaliphatic or aromatic groups. Suitable polyols A5) are compounds having up to about 20 carbons per molecule, such as ethylene glycol, diethylene glycol, triethylene glycol, 1,2-propanediol, 1,3-propanediol, 1,4-butanediol, 1,3-butylene glycol, cyclohexanediol, 1,4-cyclohexanedimethanol, 1,6-hexanediol, hydro-quinone dihydroxyethyl ether, bisphenol A (2,2-bis(4-hydroxyphenyl)propane), hydrogenated bisphenol A (2,2-bis(4-hydroxycyclohexyl)propane) and also mixtures thereof, and also trimethylolpropane, glycerol or pentaerythritol. Ester diols as well, such as δ-hydroxybutyl-ε-hydroxy-caproic esters, ω-hydroxyhexyl-γ-hydroxybutyric esters, adipic acid β-hydroxyethyl esters or terephthalic acid bis(β-hydroxyethyl) ester, for example, can be used.

Diamines or polyamines and also hydrazides can likewise be used as A5), examples being ethylenediamine, 1,2- and 1,3-diaminopropane, 1,4-diaminobutane, 1,6-diaminohexane, isophoronediamine, the isomer mixture of 2,2,4- and 2,4,4-trimethylhexamethylenediamine, 2-methylpentamethylene-diamine, diethylenetriamine, 1,3- and 1,4-xylylenediamine, α,α,α',α'-tetramethyl-1,3- and -1,4-xylylenediamine and 4,4-diaminodicyclohexylmethane, dimethylethylenediamine, hydrazine or adipic dihydrazide. Component (A5) preferably contains at least 2% by weight of at least one compound which has a functionality of three or more in respect of reaction with NCO groups.

In another embodiment of the aqueous resin composition according to the invention the reaction mixture for obtaining the polyester-polyurethane further comprises
A6) a compound which is monofunctional in terms of reaction with NCO groups or which contains active hydrogen atoms differing in reactivity, these units being located in each case at the chain end of a polymer containing urethane groups.

The resin may where appropriate also include units A6) which are each located at the chain ends, and cap them. These units are derived on the one hand from monofunctional, isocyanate-reactive compounds, such as monoamines, especially mono-secondary amines, or monoalcohols. Mention may be made here by way of example of methylamine, ethylamine, propylamine, butylamine, octylamine, laurylamine, stearylamine, isononyloxypropylamine, dimethylamine, diethylamine, dipropylamine, dibutylamine, N-methylaminopropylamine, diethyl(methyl)aminopropylamine, morpholine, piperidine or the substituted derivatives thereof, amido amines from diprimary amines and monocarboxylic acids, monoketimines of diprimary amines, primary/tertiary amines, such as N,N-dimethylaminopropylamine, for example.

Likewise suitable as component A6) are compounds containing active hydrogen atoms which differ in reactivity towards isocyanate groups, such as compounds which in addition to a primary amino group also contain secondary amino groups or in addition to an OH group also contain COOH groups or in addition to an amino group (primary or secondary) also contain OH groups. Preference is given to compounds A6) which in addition to an amino group (primary or secondary) also contain OH groups. Examples of such are primary/secondary amines, such as 3-amino-1-methylaminopropane, 3-amino-1-ethylaminopropane, 3-amino-1-cyclohexylaminopropane, 3-amino-1-methylaminobutane; mono-hydroxy-carboxylic acids, such as hydroxyacetic acid, lactic acid or malic acid, and also alkanolamines such as N-aminoethylethanolamine, ethanolamine, 3-amino-propanol, neopentanolamine, and, with particular preference, diethanolamine. In this way it is possible additionally to introduce functional groups into the polymer end product.

In another embodiment of the aqueous resin composition according to the invention the polyisocyanate component A3) is chosen from the group consisting of isophorone-diisocyanate, hexamethylene-diisocyanate, bis-(4-isocyanatocyclohexyl)-methane, ω,ω'-diisocyanato-1,3-dimethylcyclohexane, triisocyanatononane and 1,3-bis(isocyanatomethyl)benzene.

Another aspect of the present invention is a process for preparing the aqueous resin composition according to claim 1, comprising the steps of:
reacting, in a one-stage process or multi-stage process, a reaction mixture comprising
   (A1) a polyester polyol with a number-average molecular weight Mₙ of ≥ 400 g/mole to ≤ 6000 g/mole determined according to DIN 55672/1,
   (A2) at least one compound containing at least two isocyanate-reactive groups and at least one group capable of forming anions, and
   (A3) a polyisocyanate,
adding a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X), and
adding a neutralizing agent.

With respect to individual components mentioned above, in the interest of brevity reference is made to the previous description in connection with the aqueous resin composition.

The urethanization reaction is normally conducted at temperatures from 0 °C to 140 °C, depending on the reactivity of the isocyanate used. In order to accelerate the urethanization reaction it is possible to use suitable catalysts, such as are known for the acceleration of the NCO-OH reaction to the person skilled in the art. Examples are tertiary amines such as triethylamine, for example, organotin compounds such as dibutyltin oxide, dibutyltin dilaurate or tin bis(2-ethylhexanoate), for example, or other organometallic compounds.

The urethanization reaction is preferably conducted in the presence of solvents which are inactive towards isocyanate groups. Particularly suitable for this purpose are those solvents which are compatible with water, such as ethers, ketones and esters, and also N-methylpyrrolidone, for example. The amount of this solvent appropriately does not exceed 30% by weight and is in some cases in the range from 10 to 25% by weight, based in each case on the sum of polyurethane resin and solvent. The polyisocyanate A3) can be added swiftly to the solution of the other components.

The acid groups incorporated in the resin by component A2) can at least proportionally be neutralized. Particularly suitable for the neutralization are tertiary amines, examples being trialkylamines having 1 to 12, in some cases 1 to 6, carbon atoms in each alkyl radical. Examples thereof are trimethylamine, triethylamine, methyldiethylamine, tripropylamine and diisopropylethylamine. The alkyl radicals may, for example, also carry hydroxyl groups, as in the case of the dialkylmonoalkanol-, alkyldialkanol- and trialkanolamines. An example of such is dimethylethanolamine, which serves preferably as neutralizing agent. As neutralizing agent it is also possible where appropriate to use inorganic bases, such as ammonia or sodium or potassium hydroxide. The neutralizing agent is used in a molar ratio to the acid groups of the prepolymer of from 0,3:1 to 1,3:1, in some cases from 0,4:1 to 1:1.

The free COOH groups of the resin of the invention can be neutralized before, during or after the urethanization reaction. The neutralizing step is preferably conducted following the urethanization reaction, generally of between room temperature (23 °C) and 80 °C, in some cases between 40 to 80 °C.

The present invention is furthermore directed towards an aqueous coating system comprising the aqueous resin composition according to the invention and at least one cross-linker compound.

Through combination with cross-linkers it is possible, depending on the reactivity or, where appropriate, blocking of the cross-linkers, to prepare both one-component (1K) and two-component (2K) coating materials. 1K coating materials for the purposes of the present invention are coating materials in which binder component and cross-linker component can be stored together without any cross-linking reaction taking place to a marked extent or to an extent which is detrimental to the subsequent application. The cross-linking reaction takes place only on application, after the cross-linker has been activated. This activation can be effectuated, for example, by raising the temperature. 2K coating materials for the purposes of the present invention are coating materials in which binder component and cross-linker component have to be stored in separate vessels owing to their high reactivity. The two components are not mixed until shortly prior to application, when they react generally without additional activation. In order to accelerate the cross-linking reaction, however, it is also possible to use catalysts or to employ higher temperatures.

Examples of suitable cross-linkers are polyisocyanate cross-linkers, amide- and amine-formaldehyde resins, phenolic resins, aldehyde resins and ketone resins, such as phenol formaldehyde resins, resoles, furan resins, urea resins, carbamic ester resins, triazine resins, melamine resins, benzoguanamine resins, cyanamide resins, aniline resins, as described in "Lackkunstharze", H. Wagner, H.F. Sarx, Carl Hanser Verlag München, 1971. Preferred cross-linkers are polyisocyanates.

Polyisocyanates can be used with free and/or blocked isocyanate groups. Suitable such cross-linker resins include blocked polyisocyanates based for example on isophorone diisocyanate, hexamethylene diisocyanate, 1,4-diisocyanatocyclo-hexane, bis(4-isocyanatocyclohexane)methane or 1,3-diisocyanatobenzene or based on paint polyisocyanates such as polyisocyanates which contain biuret or isocyanurate groups and are derived from 1,6-diisocyanatohexane, isophorone diisocyanate or bis(4-isocyanatocyclohexane)methane or paint polyisocyanates which contain urethane groups and are based on 2,4- and/or 2,6-diisocyanato-toluene or isophorone diisocyanate on the one hand and low molecular weight polyhydroxyl compounds such as trimethylolpropane, the isomeric propanediols or butanediols or any desired mixtures of such polyhydroxyl compounds on the other.

Suitable blocking agents for the stated polyisocyanates are, for example, monohydric alcohols such as methanol, ethanol, butanol, hexanol, cyclohexanol, benzyl alcohol, oximes such as acetoxime, methyl ethyl ketoxime, cyclohexanone oxime, lactams such as ε-caprolactam, phenols, amines such as diisopropylamine or dibutylamine, dimethylpyrazole or triazole, and also dimethyl malonate, diethyl malonate or dibutyl malonate.

Preference is given to the use of low-viscosity, hydrophobic or hydrophilicized polyisocyanates with free isocyanate groups based on aliphatic, cycloaliphatic, araliphatic and/or aromatic isocyanates, more preferably on aliphatic or cycloaliphatic isocyanates, since in this way it is possible to achieve a particularly high level of resistance in the coating film. The advantages of the binder dispersions of the invention are most clearly manifested in combination with these cross-linkers. These polyisocyanates generally have at 23 °C a viscosity of from 10 to 3500 mPas. If necessary the polyisocyanates can be employed as a blend of small amounts of inert solvents, in order to lower the viscosity to a level within the stated range. Triisocyanatononane as well can be used alone or in mixtures as a cross-linker component.

The resin and dispersion described herein are generally of sufficient hydrophilicity, so that the dispersibility of the cross-linker resins, where the substances in question are not water-soluble or water-dispersible in any case, is ensured. Water-soluble or gap dispersible polyisocyanates are obtainable, for example, by modification with carboxylate, sulfonate and/or polyethylene oxide groups and/or polyethylene oxide/polypropylene oxide groups.

Hydrophilicization of polyisocyanates, for example, is possible by reaction with substoichiometric amounts of monohydric hydrophilic polyether alcohols. The preparation of hydrophilicized polyisocyanates of this kind is described for example in EP 0 540 985 A1 (p. 3, line 55 - p. 4 line 5). Also highly suitable are the polyisocyanates containing allophanate groups described in EP 0 959 087 A1 (p. 3 lines 39 - 51), which can be prepared by reacting low-monomer-content polyisocyanates with polyethylene oxide polyether alcohols under allophanatization conditions. The water-dispersible polyisocyanate mixtures based on triisocyanatononane, as well, which are described in DE 100 078 21 A1 (p. 2 line 66 - p. 3 line 5) are suitable, as are polyisocyanates hydrophilicized with ionic groups (sulfonate groups, phosphonate groups), as described, for example, in DE 10 024 624 A1 (p. 3 lines 13 - 33). A further possibility is that of hydrophilicization through the addition of commercially customary emulsifiers.

In principle it is of course also possible to use mixtures of different cross-linker resins.

Preferred cross-linker components are hydrophobic or hydrophilicized polyisocyanates containing free isocyanate groups based on aliphatic, cycloaliphatic, araliphatic and/or aromatic isocyanates.

The aqueous coating systems comprising the resins of the invention can where appropriate also contain other binders or dispersions, based for example on polyesters, polyurethanes, polyethers, polyepoxides or polyacrylates, and, where appropriate, pigments and other auxiliaries and additives that are known in the coatings industry.

Customary coatings auxiliaries and additives can be added both to the aqueous coating system before, during or after its preparation and to the binder or cross-linker components present in the said system. Examples include defoamers, thickeners, pigments, dispersing auxiliaries, dulling agents, catalysts, anti-skinning agents, anti-settling agents or emulsifiers.

The coating system according to the invention displays an excellent resistance to environmental conditions. Hence, the invention also encompasses the use of this coating system for coating, varnishing and/or sealing a substrate selected from the group consisting of wood, board, metal, stone, concrete, glass, cloth, leather, paper, plastic and foam. Preferably the inventively claimed coating system is used for coating, varnishing and/or sealing a metal substrate selected from the group consisting of steel, cold rolled steel, hot rolled steel, stainless steel, aluminum, steel coated with zinc metal, steel coated with zinc alloys, and mixtures thereof. In another embodiment the inventively claimed coating system is used for coating, varnishing or sealing a metal substrate, wherein the substrate is exposed to a marine environment. It is particularly preferred to use the coating system according to the invention to coat exposed parts of wind energy systems in off-shore wind energy facilities or aircrafts.

The coating system can be produced by any of the various spraying methods, such as air pressure spraying, airless spraying or electrostatic spraying methods, for example, using one-component or, where appropriate, two-component spraying equipment. The coating systems can, however, also be applied by other processes, for example by brushing, rolling or knife coating.

The present invention will be further described by way of the following examples without wishing to be limited by them.

### Examples:

### Example 1: synthesis of a polyester-polyurethane resin

A polyester-polyurethane resin was prepared from the following components:

| | Amount [g] | Weight-% |
|---|---|---|
| Polyester polyol | 2229 | 73,3 |
| Dimethylol propionic acid | 180 | 6 |
| Tin(II)-ethylhexanoate | 3,8 | 0,125 |
| Acetone | 1615 | for 65 weight-% solids |
| Isophorone diisocyanate | 591 | 19,7 |

The polyester polyol employed had an acid number of 2,8-2,9 mg KOH/g (DIN 3682), an OH number of 200 mg KOH/g (theory) and 180 mg KOH/g - 205 mg KOH/g (experimental) (DIN 53240 part 2).

A reaction vessel was charged with all components except isophorone diisocyanate and the mixture was heated to 55 °C for two hours. Then isophorone diisocyanate was added (exothermic reaction) and the reaction temperature was kept at ca. 58 °C until an NCO content of < 0,05% was reached. The product was cooled to 35 °C and filled into containers for storage.

### Example 2: synthesis of a polyester-polyurethane resin dispersion as state of the art

### Example 2.1

| | Amount [g] | Weight-% |
|---|---|---|
| Resin of example 1 (65 weight-% solids) | 6000 | 66,67 |
| N,N-dimethylethanolamine | 126 | |
| Deionized water | 5441 | for 43 weight-% solids |

A reaction vessel was charged with the resin of example 1 and acetone and it was heated to 55 °C for two hours. After cooling to 50 °C N,N-dimethylethanolamine was added, the mixture was stirred for one hour at this temperature and the mixture was dispersed in water. Finally the acetone was removed by vacuum distillation. After cooling the viscosity was set to ca. 1000 mPa s (measured at 23 °C with a Brookfield rotational viscometer). The dispersion had a solids content of 47 weight-% (the solids content was determines in a drying cabinet and calculated as follows: final weight [g] * 100 / initial weight [g] = wt.% solids).

### Example 3: synthesis of a polyester-polyurethane resin dispersion regarding to the invention

A polyester-polyurethane resin dispersion was prepared from the following components:

**Example 3.1**

| | Amount [g] | Weight-% |
|---|---|---|
| Resin of example 1 (65 weight-% solids) | 1000 | 66,67 |
| Dendritic polyol 1 | 325 | 33,33 |
| Acetone | 625 | |
| N,N-dimethylethanolamine | 27,2 | |
| Deionized water | 861,2 | for 47 weight-% solids |
| Acetone | 975,0 | |
| Propylene glycol-n-butyl ether | 172,1 | |

**Example 3.2**

| | Amount [g] | Weight-% |
|---|---|---|
| Resin of example 1 (65 weight-% solids) | 1250 | 73,06 |
| Dendritic polyol 1 | 390 | 26,94 |
| Acetone | 710 | |
| N,N-dimethylethanolamine | 32,2 | |
| Deionized water | 805,2 | for 47 weight-% solids |
| Acetone | 1080 | |
| Propylene glycol-n-butyl ether | 185,1 | |

**Example 3.3**

| | Amount [g] | Weight-% |
|---|---|---|
| Resin of example 1 (65 weight-% solids) | 925 | 70,80 |
| Dendritic polyol 1 | 320 | 29,20 |
| Acetone | 595 | |
| N,N-dimethylethanolamine | 26,5 | |
| Deionized water | 614,1 | for 47 weight-% solids |
| Acetone | 895,0 | |
| Propylene glycol-n-butyl ether | 165,1 | |

The dendritic polyol 1 was a dendritic polyol with terminal OH groups formed by polymerization of trimethylolpropane as a central initiator molecule and 2,2-dimethylolpropionic acid as a monomeric chain extender. The OH value was 560-630 mg KOH/g (DIN 53240 part 2) and with a bimodal molecular weight distribution the nominal number average molecular weight (GPC) was 1800 g/mole. It may be sourced as Boltorn® P500 from Perstorp.

A reaction vessel was charged with the resin of example 1, the dendritic polyol 1 and acetone and it was heated to 55 °C for two hours. After cooling to 50 °C N,N-dimethylethanolamine was added, the mixture was stirred for one hour at this temperature and the mixture was dispersed in water. Finally, acetone were added and the acetone was removed by vacuum distillation. As a last step propylene glycol-n-butyl ether was added, the mixture was heated to 70 °C for two hours. After cooling the viscosity was set to ca. 1000 mPa s (measured at 23 °C with a Brookfield rotational viscometer). The dispersion had a solids content of 47 weight-% (the solids content was determines in a drying cabinet and calculated as follows: final weight [g] * 100 / initial weight [g] = wt.% solids).

### Example 4: synthesis of a polyester-polyurethane resin dispersion regarding to the convention

A polyester-polyurethane resin dispersion was prepared from the following components:

**Example 4.1:**

| | Amount [g] | Weight-% |
|---|---|---|
| Resin of example 1 (65 weight-% solids) | 1000 | 62,5 |
| Dendritic polyol 2 | 390 | 37,5 |
| Acetone | 690 | |
| N,N-dimethylethanolamine | 27,2 | |
| Deionized water | 685,6 | for 47 weight-% solids |
| Acetone | 1040 | |
| Propylene glycol-n-butyl ether | 183,5 | |

**Example 4.2:**

| | Amount [g] | Weight-% |
|---|---|---|
| Resin of example 1 (65 weight-% solids) | 970 | 70,2 |
| Dendritic polyol 2 | 350 | 29,8 |
| Acetone | 645 | |
| N,N-dimethylethanolamine | 26,2 | |
| Deionized water | 649,8 | for 47 weight-% solids |
| Acetone | 1015 | |
| Propylene glycol-n-butyl ether | 175,6 | |

**Example 4.3:**

| | Amount [g] | Weight-% |
|---|---|---|
| Resin of example 1 (65 weight-% solids) | 1050 | 68,0 |
| Dendritic polyol 2 | 325 | 32,0 |
| Acetone | 690 | |
| N,N-dimethylethanolamine | 27,2 | |
| Deionized water | 678,6 | for 47 weight-% solids |
| Acetone | 1040 | |
| Propylene glycol-n-butyl ether | 183,5 | |

The dendritic polyol 2 was a dendritic polyol with terminal OH groups formed by polymerization of trimethylolpropane as a central initiator molecule and 2,2-dimethylolpropionic acid as a monomeric chain extender. The OH value was 430-590 mg KOH/g (DIN 53240 part 2) and with a bimodal molecular weight distribution the nominal number average molecular weight (GPC) was 1500 g/mole. It may be sourced as Boltorn® P1000 from Perstorp.

A reaction vessel was charged with the resin of example 1, the dendritic polyol 1 and acetone and it was heated to 55 °C for two hours. After cooling to 50 °C N,N-dimethylethanolamine was added, the mixture was stirred for one hour at this temperature and the mixture was dispersed in water. Finally, acetone were added and the acetone was removed by vacuum distillation. As a last step propylene glycol-n-butyl ether was added, the mixture was heated to 70 °C for two hours. After cooling the viscosity was set to ca. 1000 mPa s (measured at 23 °C with a Brookfield rotational viscometer). The dispersion had a solids content of 47 weight-% (the solids content was determines in a drying cabinet and calculated as follows: final weight [g] * 100 / initial weight [g] = wt.% solids).

### Application data:

In a experiment according to Koenig (DIN EN ISO 1522) (pendulum absorption) the polyol dispersion from example 3 or 4 is used and crosslinked with a typical state of the art polyisocyanate. The resulting PU coating on a glass substrate is compared to a state of the art system also on a glass substrate based on example 2 (Table 1).

**Table 1.**

| Property | Example 2 | Example 3.1 |
|---|---|---|
| Pendulum absorption after 16h 30 min at 60° C | 73 s | 137 s |
| | | |

| Property | Example 2 | Example 4.1 |
|---|---|---|
| Pendulum absorption after 16h 30 min at 60° C | 73 s | 84 s |

## Claims

1. An aqueous resin composition comprising a polyester-polyurethane resin obtained by reacting, in a one-stage process or multi-stage process, a reaction mixture comprising
(A1) a polyester polyol with a number-average molecular weight Mₙ of ≥ 400 g/mole to ≤ 20 000 g/mole determined according to DIN 55672/1,
(A2) at least one compound containing at least two isocyanate-reactive groups and at least one group capable of forming anions, and
(A3) a polyisocyanate,
the aqueous resin composition further comprising a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X).

2. The aqueous resin composition according to claim 1, wherein in the dendritic polyol the tree structure is extended and further branched from the initiator molecule or initiator polymer through an addition of further molecules of a monomeric chain extender by means of bonding with the reactive groups (X) and (Y) thereof and/or is further extended through reaction with a chain stopper.

3. The aqueous resin composition according to claim 1, wherein in the dendritic polyol the central initiator molecule or initiator polymer is selected from the group consisting of an aliphatic diol, a cycloaliphatic diol, an aromatic diol, a triol, a tetrol, a sugar alcohol, anhydroennea-heptitol, dipentaerythritol, an alpha-alkylglucoside, a monofunctional alcohol, and an alkoxylate polymer having a molecular weight of at most 8000 g/mol and being produced by reaction between an alkylene oxide and one or more hydroxyl groups originating from one of the aforementioned compounds.

4. The aqueous resin composition according to claim 3, wherein in the dendritic polyol the central initiator molecule is selected from the group consisting of ditrimethylolpropane, ditrimethylolethane, dipentaerythritol, pentaerythritol, alkoxylated pentaerythritol, trimethylolethane, trimethylolpropane, alkoxylated trimethylolpropane, glycerol, neopentyl glycol, dimethylolpropane, 1,3-dioxane-5,5-dimethanol, sorbitol, mannitol and alpha-methylglucoside.

5. The aqueous resin composition according to claim 1, wherein in the dendritic polyol the chain extender is selected from the group consisting of a monofunctional carboxylic acid having at least two hydroxyl groups and a monofunctional carboxylic acid having at least two hydroxyl groups wherein one or more of the hydroxyl groups are hydroxyalkyl substituted.

6. The aqueous resin composition according to claim 5, wherein in the dendritic polyol the chain extender is selected from the group consisting of dimethylolpropionic acid, alpha, alpha-bis (hydroxymethyl)butyric acid, alpha, alpha, alpha-tris(hydroxymethyl)-acetic acid, alpha, alpha-bis-(hydroxymethyl)valeric acid, alpha, alpha-bis(hydroxy)propionic acid and 3,5-dihydroxybenzoic acid.

7. The aqueous resin composition according to claim 1, wherein the reaction mixture for obtaining the polyester-polyurethane further comprises
A4) a polycarbonate polyol which is different from polyester polyol A1) with a number average molecular weight of Mₙ of ≥ 400 g/mole to ≤ 6000 g/mole determined according to DIN 55672/1.

8. The aqueous resin composition according to claim, 1, wherein the reaction mixture for obtaining the polyester-polyurethane further comprises
A5) a low molecular weight compound containing two or more hydroxy and/or amino groups having a molecular weight of from ≥ 60 g/mole to ≤ 400 g/mole.

9. The aqueous resin composition according to claim 1, wherein the reaction mixture for obtaining the polyester-polyurethane further comprises
A6) a compound which is monofunctional in terms of reaction with NCO groups or which contains active hydrogen atoms differing in reactivity, these units being located in each case at the chain end of a polymer containing urethane groups.

10. The aqueous resin composition according to claim 1, wherein the polyisocyanate component A3) is chosen from the group consisting of isophorone-diisocyanate, hexamethylene-diisocyanate, bis-(4-isocyanatocyclohexyl)-methane, ω,ω'-diisocyanato-1,3-dimethylcyclohexane, triisocyanatononane and 1,3-bis(isocyanatomethyl)benzene.

11. A process for preparing the aqueous resin composition according to claim 1, comprising the steps of:
reacting, in a one-stage process or multi-stage process, a reaction mixture comprising
(A1) a polyester polyol with a number-average molecular weight Mₙ of ≥ 400 g/mole to ≤ 6000 g/mole determined according to DIN 55672/1,
(A2) at least one compound containing at least two isocyanate-reactive groups and at least one group capable of forming anions, and
(A3) a polyisocyanate,
adding a dendritic polyol obtainable from a central initiator molecule or initiator polymer having at least one reactive hydroxyl group (X), which hydroxyl group (X) under formation of an initial tree structure is bonded to a reactive carboxyl group (Y) in a monomeric chain extender having the two reactive groups (X) and (Y), and wherein the chain extender has at least one carboxyl group (Y) and at least two hydroxyl groups (X) or hydroxyalkyl substituted hydroxyl groups (X), and
adding a neutralizing agent.

12. An aqueous coating system comprising the aqueous resin composition according to claim 1 and at least one cross-linker compound.

13. Use of the aqueous coating system according to claim 12 for coating, varnishing and/or sealing a substrate, wherein the substrate is selected from the group consisting of wood, board, metal, stone, concrete, glass, cloth, leather, paper, plastic and foam.

14. Use according to claim 13, wherein the metal substrate selected from the group consisting of steel, cold rolled steel, hot rolled steel, stainless steel, aluminum, steel coated with zinc metal and steel coated with zinc alloys.

## Patentansprüche

1. Wässrige Harzzusammensetzung, umfassend ein Poly-ester-Polyurethan-Harz, erhalten durch Umsetzung einer Reaktionsmischung, die
(A1) ein Polyester-Polyol mit einem gemäß DIN 55672/1 bestimmten zahlenmittleren Molekulargewicht Mₙ ≥ 400 g/mol bis ≤ 20.000 g/mol,
(A2) mindestens eine Verbindung mit mindestens zwei gegenüber Isocyanat reaktiven Gruppen und mindestens einer zur Bildung von Anionen befähigten Gruppe und
(A3) ein Polyisocyanat
umfasst, in einem einstufigen Verfahren oder mehrstufigen Verfahren,
wobei die wässrige Harzzusammensetzung ferner ein dendritisches Polyol umfasst, das erhältlich ist aus einem zentralen Initiatormolekül oder Initiatorpolymer mit mindestens einer reaktiven Hydroxylgruppe (X), wobei die Hydroxylgruppe (X) unter Ausbildung einer anfänglichen Baumstruktur an eine reaktive Carboxylgruppe (Y) in einem monomeren Kettenverlängerungsmittel mit den beiden reaktiven Gruppen (X) und (Y) gebunden ist und wobei das Kettenverlängerungsmittel mindestens eine Carboxylgruppe (Y) und mindestens zwei Hydroxylgruppen (X) oder hydroxyalkylsubstituierte Hydroxylgruppen (X) aufweist.

2. Wässrige Harzzusammensetzung nach Anspruch 1, wobei in dem dendritischen Polyol die Baumstruktur durch Zugabe von weiteren Molekülen eines monomeren Kettenverlängerungsmittels durch Bindung mit den reaktiven Gruppen (X) und (Y) davon verlängert und von dem Initiatormolekül bzw. Initiatorpolymer ausgehend weiter verzweigt ist und/oder durch Reaktion mit einem Kettenstopper weiter verlängert ist.

3. Wässrige Harzzusammensetzung nach Anspruch 1, wobei in dem dendritischen Polyol das zentrale Initiatormolekül bzw. Initiatorpolymer aus der Gruppe bestehend aus einem aliphatischen Diol, einem cycloaliphatischen Diol, einem aromatischen Diol, einem Triol, einem Tetrol, einem Zucker-alkohol, Anhydroenneaheptitol, Dipentaerythritol, einem alpha-Alkylglucosid, einem monofunktionellen Alkohol und einem Alkoxylat-Polymer, das ein Molekulargewicht von höchstens 8000 g/mol aufweist und durch Reaktion zwischen einem Alkylenoxid und einer oder mehrerer von einer der oben genannten Verbindungen stammenden Hydroxylgruppen hergestellt wird, ausgewählt ist.

4. Wässrige Harzzusammensetzung nach Anspruch 3, wobei in dem dendritischen Polyol das zentrale Initiatormolekül aus der Gruppe bestehend aus Ditrimethylolpropan, Ditrimethylolethan, Dipentaerythritol, Pentaerythritol, alkoxyliertem Pentaerythritol, Trimethylolethan, Trimethylolpropan, alkoxyliertem Trimethylolpropan, Glycerin, Neopentylglykol, Dimethylolpropan, 1,3-Dioxan-5,5-dimethanol, Sorbitol, Mannitol und alpha-Methyl-glucosid ausgewählt ist.

5. Wässrige Harzzusammensetzung nach Anspruch 1, wobei in dem dendritischen Polyol das Ketten-verlängerungsmittel aus der Gruppe bestehend aus einer monofunktionellen Carbonsäure mit mindestens zwei Hydroxylgruppen und einer monofunktionellen Carbonsäure mit mindestens zwei Hydroxylgruppen, in der eine oder mehrere der Hydroxylgruppen hydroxyalkylsubstituiert sind, ausgewählt ist.

6. Wässrige Harzzusammensetzung nach Anspruch 5, wobei in dem dendritischen Polyol das Kettenverlängerungsmittel aus der Gruppe bestehend aus Dimethylolpropionsäure, alpha,alpha-Bis(hydroxy-methyl)buttersäure, alpha,alpha,alpha-Tris-(hydroxymethyl)essigsäure, alpha,alpha-Bis-(hydroxymethyl)valeriansäure, alpha,alpha-Bis-(hydroxymethyl)propionsäure und 3,5-Dihydroxy-benzoesäure ausgewählt ist.

7. Wässrige Harzzusammensetzung nach Anspruch 1, wobei die Reaktionsmischung zum Erhalt des Polyester-Polyurethans ferner
(A4) ein Polycarbonat-Polyol, das von dem Polyester-Polyol (A1) verschieden ist, mit einem gemäß DIN 55672/1 bestimmten zahlenmittleren Molekulargewicht Mₙ ≥ 400 g/mol bis ≤ 6000 g/mol
umfasst.

8. Wässrige Harzzusammensetzung nach Anspruch 1, wobei die Reaktionsmischung zum Erhalt des Polyester-Polyurethans ferner
(A5) eine niedermolekulare Verbindung mit zwei oder mehr Hydroxy- und/oder Aminogruppen und einem Molekulargewicht ≥ 60 g/mol bis ≤ 400 g/mol
umfasst.

9. Wässrige Harzzusammensetzung nach Anspruch 1, wobei die Reaktionsmischung zum Erhalt des Polyester-Polyurethans ferner
(A6) eine Verbindung, die bezüglich der Reaktion mit NCO-Gruppen monofunktionell ist oder aktive Wasserstoffatome unterschiedlicher Reaktivität enthält, wobei sich diese Bausteine jeweils am Kettenende eines Urethangruppen enthaltenden Polymers befinden,
umfasst.

10. Wässrige Harzzusammensetzung nach Anspruch 1, wobei die Polyisocyanat-Komponente (A3) aus der Gruppe bestehend aus Isophorondiisocyanat, Hexamethylendiisocyanat, Bis(4-isocyanatocyclohexyl)methan, ω,ω'-Diisocyanato-1,3-dimethylcyclohexan, Triisocyanatononan und 1,3-Bis(isocyanatomethyl)benzol ausgewählt ist.

11. Verfahren zur Herstellung der wässrigen Harzzusammensetzung nach Anspruch 1, das folgende Schritte umfasst:
Umsetzen einer Reaktionsmischung, die
(A1) ein Polyester-Polyol mit einem gemäß DIN 55672/1 bestimmten zahlenmittleren Molekulargewicht Mₙ ≥ 400 g/mol bis ≤ 6000 g/mol,
(A2) mindestens eine Verbindung mit mindestens zwei gegenüber Isocyanat reaktiven Gruppen und mindestens einer zur Bildung von Anionen befähigten Gruppe und
(A3) ein Polyisocyanat
umfasst, in einem einstufigen Verfahren oder mehrstufigen Verfahren,
Zugeben eines dendritischen Polyols, das erhältlich ist aus einem zentralen Initiatormolekül oder Initiatorpolymer mit mindestens einer reaktiven Hydroxylgruppe (X), wobei die Hydroxylgruppe (X) unter Ausbildung einer anfänglichen Baumstruktur an eine reaktive Carboxylgruppe (Y) in einem monomeren Kettenverlängerungsmittel mit den beiden reaktiven Gruppen (X) und (Y) gebunden ist und wobei das Kettenverlängerungsmittel mindestens eine Carboxylgruppe (Y) und mindestens zwei Hydroxylgruppen (X) oder hydroxyalkylsubstituierte Hydroxylgruppen (X) aufweist, und
Zugeben eines Neutralisationsmittels.

12. Wässriges Beschichtungssystem, umfassend die wässrige Harzzusammensetzung nach Anspruch 1 und mindestens eine Vernetzerverbindung.

13. Verwendung des wässrigen Beschichtungssystems nach Anspruch 12 zur Beschichtung, Lackierung und/oder Versiegelung eines Substrats, wobei das Substrat aus der Gruppe bestehend aus Holz, Pappe, Metall, Stein, Beton, Glas, Tuch, Leder, Papier, Kunststoff und Schaumstoff ausgewählt ist.

14. Verwendung nach Anspruch 13, wobei das Metall-substrat aus der Gruppe bestehend aus Stahl, kaltgewalztem Stahl, warmgewalztem Stahl, nichtrostendem Stahl, Aluminium, mit Zinkmetall beschichtetem Stahl und mit Zinklegierungen beschichtetem Stahl ausgewählt ist.

## Revendications

1. Composition de résine aqueuse comprenant une résine de polyester-polyuréthane obtenue en faisant réagir, dans un procédé en une seule étape ou un procédé en plusieurs étapes, un mélange réactionnel comprenant
(A1) un polyester-polyol avec un poids moléculaire moyen en nombre Mₙ de ≥ 400 g/mole à ≤ 20 000 g/mole déterminé selon la norme DIN 55672/1,
(A2) au moins un composé contenant au moins deux groupes réactifs avec les isocyanates et au moins un groupe susceptible de former des anions, et
(A3) un polyisocyanate,
la composition de résine aqueuse comprenant en outre un polyol dendritique pouvant être obtenu à partir d'une molécule initiatrice centrale ou d'un polymère initiateur central ayant au moins un groupe hydroxyle réactif (X), lequel groupe hydroxyle (X), lors de la formation d'une structure arborescente initiale, est lié à un groupe carboxyle réactif (Y) dans un agent d'allongement de chaîne monomère ayant les deux groupes réactifs (X) et (Y), et l'agent d'allongement de chaîne ayant au moins un groupe carboxyle (Y) et au moins deux groupes hydroxyle (X) ou groupes hydroxyle (X) substitués par un hydroxyalkyle.

2. Composition de résine aqueuse selon la revendication 1 dans laquelle, dans le polyol dendritique, la structure arborescente est allongée et encore ramifiée à partir de la molécule initiatrice ou du polymère initiateur par une addition d'autres molécules d'un agent d'allongement de chaîne monomère au moyen de liaisons avec les groupes réactifs (X) et (Y) de celui-ci et/ou est encore allongée par réaction avec un agent d'interruption de chaîne.

3. Composition de résine aqueuse selon la revendication 1 dans laquelle, dans le polyol dendritique, la molécule initiatrice centrale ou le polymère initiateur central est choisi dans le groupe constitué par un diol aliphatique, un diol cycloaliphatique, un diol aromatique, un triol, un tétrol, un sucre-alcool, l'anhydroennéa-heptitol, le dipentaérythritol, un alpha-alkylglucoside, un alcool monofonctionnel, et un polymère d'alcoxylate ayant un poids moléculaire de 8000 g/mol maximum et étant produit par réaction entre un oxyde d'alkylène et un ou plusieurs groupes hydroxyle provenant d'un des composés susmentionnés.

4. Composition de résine aqueuse selon la revendication 3 dans laquelle, dans le polyol dendritique, la molécule initiatrice centrale est choisie dans le groupe constitué par le ditriméthylolpropane, le ditriméthyloléthane, le dipentaérythritol, le pentaérythritol, le pentaérythritol alcoxylé, le triméthyloléthane, le triméthylolpropane, le triméthylolpropane alcoxylé, le glycérol, le néopentylglycol, le diméthylolpropane, le 1,3-dioxane-5,5-diméthanol, le sorbitol, le mannitol et l'alpha-méthylglucoside.

5. Composition de résine aqueuse selon la revendication 1 dans laquelle, dans le polyol dendritique, l'agent d'allongement de chaîne est choisi dans le groupe constitué par un acide carboxylique monofonctionnel ayant au moins deux groupes hydroxyle et un acide carboxylique monofonctionnel ayant au moins deux groupes hydroxyle dans lequel un ou plusieurs des groupes hydroxyle sont substitués par un hydroxyalkyle.

6. Composition de résine aqueuse selon la revendication 5 dans laquelle, dans le polyol dendritique, l'agent d'allongement de chaîne est choisi dans le groupe constitué par l'acide diméthylolpropionique, l'acide alpha,alpha-bis(hydroxyméthyl)butyrique, l'acide alpha,alpha,alpha-tris(hydroxyméthyl)acétique, l'acide alpha,alpha-bis(hydroxyméthyl)valérique, l'acide alpha,alpha-bis(hydroxy)propionique et l'acide 3,5-dihydroxybenzoïque.

7. Composition de résine aqueuse selon la revendication 1, dans laquelle le mélange réactionnel servant à obtenir le polyester-polyuréthane comprend en outre
A4) un polycarbonate-polyol qui est différent du polyester-polyol A1) avec un poids moléculaire moyen en nombre Mₙ de ≥ 400 g/mole à ≤ 6000 g/mole déterminé selon la norme DIN 55672/1.

8. Composition de résine aqueuse selon la revendication 1, dans laquelle le mélange réactionnel servant à obtenir le polyester-polyuréthane comprend en outre
A5) un composé à bas poids moléculaire contenant au moins deux groupes hydroxyle et/ou amino ayant un poids moléculaire de ≥ 60 g/mole à ≤ 400 g/mole.

9. Composition de résine aqueuse selon la revendication 1, dans laquelle le mélange réactionnel servant à obtenir le polyester-polyuréthane comprend en outre
A6) un composé qui est monofonctionnel en terme de réaction avec des groupes NCO ou qui contient des atomes d'hydrogène actifs de réactivité différente, ces motifs se situant dans chaque cas à l'extrémité de la chaîne d'un polymère contenant des groupes uréthane.

10. Composition de résine aqueuse selon la revendication 1, dans laquelle le composant polyisocyanate A3) est choisi dans le groupe constitué par le diisocyanate d'isophorone, le diisocyanate d'hexaméthylène, le bis(4-isocyanatocyclohexyl)méthane, le ω,ω'-diisocyanato-1,3-diméthylcyclohexane, le triisocyanatononane et le 1,3-bis(isocyanatométhyl)benzène.

11. Procédé de préparation de la composition de résine aqueuse selon la revendication 1, comprenant les étapes consistant à :
faire réagir, dans un procédé en une seule étape ou un procédé en plusieurs étapes, un mélange réactionnel comprenant
(A1) un polyester-polyol avec un poids moléculaire moyen en nombre Mₙ de ≥ 400 g/mole à ≤ 6000 g/mole déterminé selon la norme DIN 55672/1,
(A2) au moins un composé contenant au moins deux groupes réactifs avec les isocyanates et au moins un groupe susceptible de former des anions, et
(A3) un polyisocyanate,
ajouter un polyol dendritique pouvant être obtenu à partir d'une molécule initiatrice centrale ou d'un polymère initiateur central ayant au moins un groupe hydroxyle réactif (X), lequel groupe hydroxyle (X), lors de la formation d'une structure arborescente initiale, est lié à un groupe carboxyle réactif (Y) dans un agent d'allongement de chaîne monomère ayant les deux groupes réactifs (X) et (Y), et l'agent d'allongement de chaîne ayant au moins un groupe carboxyle (Y) et au moins deux groupes hydroxyle (X) ou groupes hydroxyle (X) substitués par un hydroxyalkyle, et
ajouter un agent neutralisant.

12. Système de revêtement aqueux comprenant la composition de résine aqueuse selon la revendication 1 et au moins un composé de réticulation.

13. Utilisation du système de revêtement aqueux selon la revendication 12 pour le revêtement, le vernissage et/ou l'étanchéification d'un substrat, le substrat étant choisi dans le groupe constitué par le bois, le carton, le métal, la pierre, le béton, le verre, le tissu, le cuir, le papier, le plastique et la mousse.

14. Utilisation selon la revendication 13, dans lequel le substrat métallique est choisi dans le groupe constitué par l'acier, l'acier laminé à froid, l'acier laminé à chaud, l'acier inoxydable, l'aluminium, l'acier recouvert de zinc métallique et l'acier recouvert d'alliages de zinc.
